# EUROPÄISCHE PATENTSCHRIFT

(11) **EP 0 960 534 B1**
(45) Veröffentlichungstag und Bekanntmachung des Hinweises auf die Patenterteilung: **31.03.2004**
(21) Anmeldenummer: 98905221.2
(22) Anmeldetag: 08.01.1998
(51) Int. Cl.: H04Q 1/14, H01R 9/24

(54) **EINRICHTUNG ZUM EINSTELLEN DER KONTAKTLAGE VON STECKKONTAKTSTELLEN EINES VERTEILERBAUTEILS**
DEVICE FOR REGULATING THE CONTACT POSITION OF PLUG-IN CONTACT POINTS OF A DISTRIBUTION COMPONENT
DISPOSITIF POUR LE REGLAGE DE LA POSITION DE CONTACT DES POINTS DE CONTACTS A FICHES D'UN COMPOSANT D'UN DISTRIBUTEUR

(30) Priorität: 13.01.1997 DE 19700843
(43) Veröffentlichungstag der Anmeldung: 01.12.1999
(73) Patentinhaber: CCS Technology, Inc., Wilmington, DE 19803 (US)
(72) Erfinder: BRENNER, Wolfgang, D-82223 Eichenau (DE)
(74) Vertreter: Sturm, Christoph, Dipl.-Ing.
(86) Internationale Anmeldenummer: PCT/DE1998/000046
(87) Internationale Veröffentlichungsnummer: WO 1998/031157

(56) Entgegenhaltungen:
- WO-A-97/37407
- DE-A- 3 625 422
- DE-A- 3 706 101

## Beschreibung

Die Erfindung bezieht sich auf eine Einrichtung zum Einstellen der Kontaktlage von Kontaktstellen eines Kontaktbauteiles in einem Verteiler einer Telekommunikationsanlage, wobei an die Kontaktstellen Gegenkontakte einer Schutzbaugruppe ansteckbar sind.

Durch die WO 91/1429 ist ein Kontaktbauteil für Verteiler von Telekommunikationsanlagen bekannt geworden, bei dem ankommende und abgehende Leitungen an zwei übereinanderliegenden parallelen Reihen von Anschlußelementen angeschlossen sind, die über Kontaktfedern mit rückseitig angeordneten Kontaktstellen verbunden sind, an die eine Schutzbaugruppe ansteckbar ist.

Die ankommenden und abgehenden Leitungen sind bei gezogener Schutzbaugruppe über die geschlossenen Kontaktstellen miteinander verbunden. Wird eine Schutzbaugruppe eingesteckt, so wird die Verbindung über die Schutzbaugruppe hergestellt. Das bedeutet, daß eine Kontaktverbindung zwischen den ankommenden und abgehenden Leitungen sowohl mit als auch ohne die angesteckte Schutzbaugruppe möglich ist.

Verschiedene Anwender fordern aber, daß bei gezogener Schutzbaugruppe keine Durchkontaktierung möglich sein soll, was sich mit geänderten Kontaktfedern oder Gehäuseteilen des Kontaktbauteils realisieren läßt.

Aus der DE 36 25 422 A1 ist ein Schichtbaustein für Verteiler von Telekommunikationsanlagen bekannt, welcher eine Außenkontaktfeder, die mit einer Außenleitung verbunden ist, und eine Innenkontaktfeder aufweist, an die Innenleitungen angeschlossen sind. Die Innenkontaktfeder und die Außenkontaktfeder können über einen im Längsverlauf der Federn vorgesehen gemeinsamen Kontakt miteinander unmittelbar verbunden sein. Zwischen die beiden freien Enden der Kontaktfedern kann unter Trennen des gemeinsamen direkten Kontakts eine Baugruppe mit Überspannungsableitern geschoben werden. Hierbei kann zwischen die beiden Kontaktfedern zusätzlich eine Steckzunge geschoben werden, wodurch sich die Innenkontaktfeder von der Baugruppe abhebt, so daß der Stromschluß zwischen Außen- und Innenkontaktfeder unterbrochen ist.

Der Erfindung liegt die Aufgabe zugrunde, ein Kontaktbauteil mit geöffneten Kontaktstellen bei geringem Änderungsaufwand liefern zu können. Diese Aufgabe wird durch die Erfindung gemäß Anspruch 1 gelöst.

Durch die Erfindung ist es möglich, für beide Anwendungsvarianten des Kontaktbauteils mit geöffneten oder geschlossenen Kontaktstellen identisch gleiche Kontaktbauteile zu verwenden.

Der geöffnete Schaltzustand wird lediglich durch ein einfaches Zusatzteil in Form des Spreizelementes hergestellt, das in das Kontaktbauteil eingesetzt wird und die Kontaktsstellen aufspreizt. Das Spreizelement kann so breit gehalten sein, daß alle Kontaktstellen des Kontaktbauteiles zugleich geöffnet werden.

Die Spreizelemente können bereits im Zuge der Herstellung und Vormontage der Kontaktbauteile beim Hersteller in die Kontaktbauteile eingesetzt werden. Es ist aber auch möglich, die Spreizelemente gesondert mitzuliefern und dem Kunden die Anpassung der Schaltstellung bei den Kontaktstellen zu überlassen.

Vorteilhafte Weiterbildungen der Erfindung sind in den Unteransprüchen gekennzeichnet:

Durch die Weiterbildung nach Anspruch 2 kann der Spreizstecker mit geringem Aufwand sicher im Kontaktbauteil verankert werden.

Durch die Weiterbildung nach Anspruch 3 können die Rastnasen als einfache Vorsprünge am Spreizstecker ausgebildet sein.

Die erforderliche Nachgiebigkeit für eine Verrastung ist mit der Auslenkbarkeit der Kontaktfedern gegeben.

Durch die Weiterbildung nach Anspruch 4 kann der Spreizstecker von der gleichen Seite her, wie die Schutzbaugruppe in das Kontaktbauteil eingesteckt werden, wobei die Steckzungen in Aufnahmekammern für die Kontaktfedern hineinragen.

Die Freimachung nach Anspruch 5 kann z.B. als durchgehender Querschlitz ausgebildet sein, an dessen Innenseite der Quersteg des Spreizsteckers anliegt. Der verbleibende freie Teil des Schlitzes ist noch immer so tief, daß die Gegenkontakte der Schutzbaugruppe zuverlässig kontaktiert werden können.

Der Spreizstift nach Anspruch 6 ist besonders geeignet für Kontaktbauteile bei denen die Schutzbaugruppe in der Richtung der Kontaktreihe in das Kontaktbauteil von der Seite her eingeschoben wird.

Der Rundstift nach Anspruch 7 stellt ein einfaches, leicht einzusetzendes Spreizelement dar.

Die Weiterbildung nach Anspruch 8 ermöglicht es, das Spreizelement so lang auszubilden, daß es sich über die gesamte Breite des Kontaktbauteils erstreckt und alle Kontaktfedern betätigt. Es ist aber auch möglich, das Spreizelement zur Betätigung einer Teilmenge der Kontaktfedern entsprechend kürzer auszubilden.

Im folgenden wird die Erfindung anhand von in der Zeichnung dargestellten Ausführungsbeispielen näher erläutert. Es zeigen:
- Figur 1: eine perspektivische Ansicht eines Verteilerblocks mit Kontaktbauteilen und Schutzbaugruppen,
- Figur 2: eine Draufsicht auf ein Kontaktbauteil mit einem Spreizstecker vor dem Einsetzen in das Kontaktbauteil,
- Figur 3: einen Schnitt entlang der Linie III-III in Figur.2,
- Figur 4: die Teile nach Figur 3 nach dem Einsetzen des Spreizsteckers in das Kontaktbauteil,
- Figur 5: die Teile nach Figur 4 mit einer angesteckten Schutzbaugruppe,
- Figur 6: ein anderes Kontaktbauteil ähnlich Figur 4 mit einem als Spreizstift ausgebildeten Spreizelement.

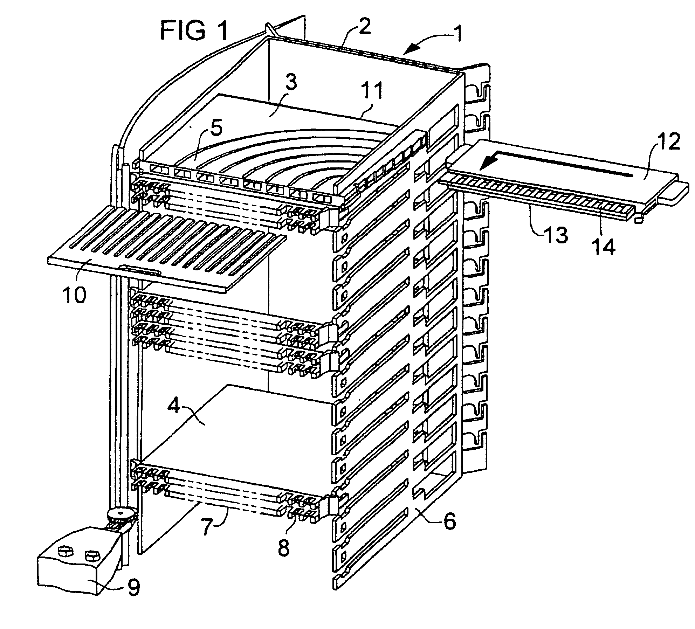

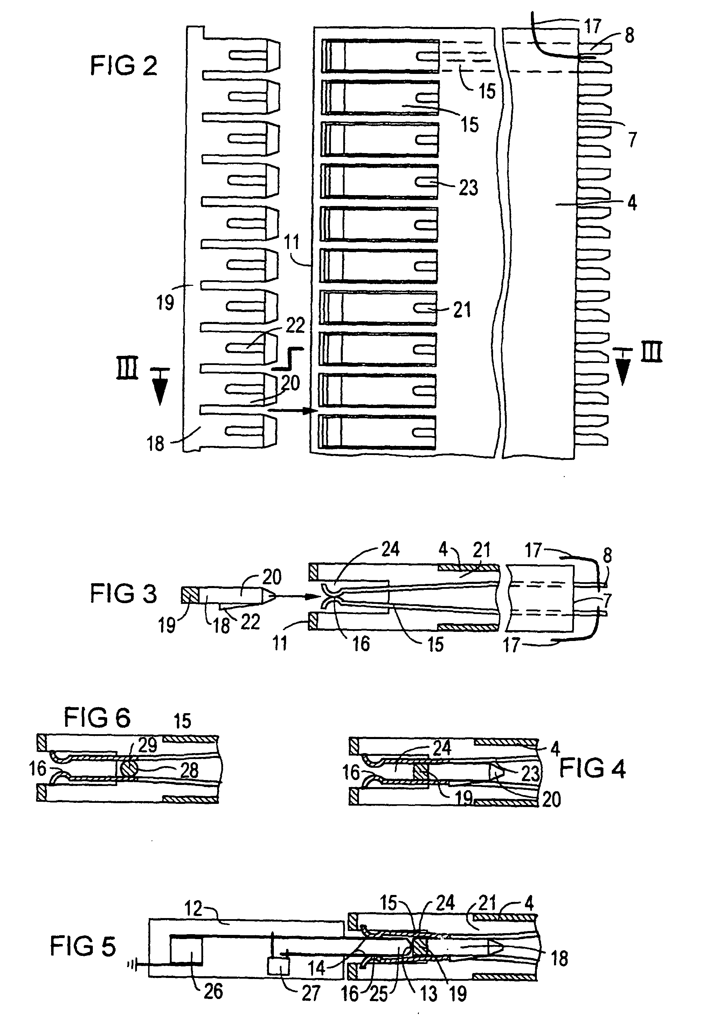

Figur 1 zeigt einen Verteilerblock 1 mit einem Trägerteil 2, in dem scheibenartige Drahtführungen 3 und Kontaktbauteile 4 sandwichartig übereinander gestapelt sind. Die Drahtführungen 3 weisen bogenförmig gekrümmte Drahtführungskanäle 5 auf, in denen ankommende und abgehende Leitungen (17, Fig. 2) von Seitenwänden 6 zu einer Bedienseite 7 des Verteilerblockes geführt werden können. Die Kontaktbauteile 4 sind an dieser Seite mit Schneidklemmen 8 versehen, in deren Klemmschlitze die ankommenden und abgehenden Leitungen mittels eines Anschlußwerkzeuges 9 kontaktgebend eingedrückt werden können. Die Schneidklemmen 8 sind mit Kontaktteilen verbunden, die im Inneren der Kontaktbauteile Trennkontakte bilden, die mittels von der Frontseite her einsteckbarer Trennstecker 10 unterbrochen werden können.

Die Kontaktbauteile 4 weisen auf ihrer der Bedienseite 7 gegenüberliegenden Rückseite 11 Kontaktstellen für eine seitlich in den Verteilerblock 1 einschiebbare Schutzbaugruppe 12 auf. Diese ist entlang ihrer dem Kontaktbauteil 4 zugewandten Frontseite 13 mit Gegenkontakten 14 versehen, die gemäß der angegebenen Pfeilrichtung zwischen die Kontaktstellen der Kontaktbauteile 4 eingesteckt werden können.

Nach den Figuren 2 und 3 ist das Kontaktbauteil 4 mit Kontaktfedern 15 versehen, die entlang der Rückseite 11 des Kontaktbauteiles 4 die Kontaktstellen 16 zum Anstecken der Schutzbaugruppe 12 bilden. Die Kontaktfedern 15 sind mit entlang der Bedienseite 7 angeordneten Schneidklemmen 8 verbunden, an die ankommende und abgehende Leitungen 17 angeschlossen sind. Im dargestellten Zustand sind die Kontaktfedern 15 an den Kontaktstellen 16 paarweise miteinander kontaktiert, so daß jeweils eine ankommende mit einer abgehenden Leitung 17 elektrisch verbunden ist. Ein als Spreizstecker 18 ausgebildetes Spreizelement ist gemäß den dargestellten Pfeilen in das Kontaktbauteil zwischen die Kontaktfedern 15 einschiebbar. Der Spreizstecker 18 ist kammerartig ausgebildet und weist in Richtung des Kontaktbauteils 4 ragende Steckzungen 20 auf, die in Aufnahmekammern 21 für die Kontaktfedern 15 im Kontaktbauteil 4 einschiebbar sind. An den Steckzungen sind Rastnasen 22 angebracht, die in schlitzartige Durchbrüche 23 der Kontaktfedern 15 einschnappbar sind. Das Kontaktbauteil weist einen sich in der Reihenrichtung der Kontaktstellen 16 erstreckende schlitzartige Ausnehmung 24 auf, die zur Rückseite 11 hin offen ist.

Nach Figur 4 ist der Spreizstecker 18 in das Kontaktbauteil 4 soweit eingesteckt, daß der Quersteg 19 des Spreizsteckers 18 am Grund der Ausnehmung 24 anliegt. Dabei sind die Rastnasen 22 in die Durchbrüche 23 der Kontaktfedern 15 eingerastet und sichern so den Spreizstecker 18 in seiner Funktionslage. Der Spreizstecker 18 befindet sich nun zwischen den Kontaktfederreihen und spreizt diese soweit auseinander, daß die Kontaktstellen 16 eines jeden Kontaktfedernpaares 15 getrennt sind. Damit ist die elektrische Verbindung zwischen den ankommenden und abgehenden Leitungen 17 unterbrochen, ohne daß dazu eine Änderung an den Kontaktbauteilen 4 erforderlich ist. Dieses kann nun ohne zusätzliche Vorkehrungen entweder mit oder ohne dem Spreizstecker, d.h. geschlossenen oder geöffneten Kontaktstellen 16 geliefert werden.

Nach Figur 5 ist zusätzlich zum Spreizstecker 18 in die Ausnehmung 24 ein Kontaktsteg 25 der Schutzbaugruppe 12 eingeschoben. Dieser Kontaktsteg 25 enthält die Gegenkontakte 14, die mit den Kontaktstellen 16 der Kontaktfedern 15 kontaktiert sind. Diese sind dabei noch weiter auseinandergespreizt, so daß eine sichere Kontaktierung gewährleistet ist. Der Quersteg 19 des Spreizsteckers 18 ist so schmal gehalten, daß der Kontaktsteg 25 genügend weit in die Ausnehmung 24 eingesteckt werden kann, um eine hinreichende Kontaktüberdekkung zu erhalten.

Die Schutzbaugruppe 12 ist mit Überspannungsableitern 26 versehen, die mit einer Reihe der Gegenkontakte 14 verbunden sind. Sie sind in der Lage, hohe Überspannungen in den nach außen führenden Teilnehmerleitungen gegen Erde abzuleiten. Die Schutzbaugruppe 12 weist ferner Stromsicherungen 27 auf, über die die beiden Reihen der Gegenkontakte elektrisch verbunden sind. Die Sicherungen bewirken bei Überstrom eine Leitungsunterbrechung zwischen den ankommenden und abgehenden Leitungen 17 (Figur 3).

Nach Figur 6 ist das Gehäuse des Kontaktbauteils 4 mit einer Querbohrung 28 versehen, die sich parallel zur Ausnehmung 24 in deren unmittelbarer Nähe erstreckt. Das Spreizelement ist hier als Rundstift 29 ausgebildet, der in die Querbohrung 28 von der Seite her eingeschoben ist und dessen Durchmesser so groß gehalten ist, daß die Kontaktfedern 15 auseinandergespreizt werden. Dadurch werden die Kontaktstellen 16 ähnlich wie in Figur 4 getrennt.

## Patentansprüche

1. Kontaktbauteil (4) eines Verteilers einer Telekommunikationsanlage, mit zwei Reihen voneinander paarweise gegenüberliegenden und miteinander verbindbaren Anschlußelementen (7, 8) für ankommende und abgehende Leitungen (17), wobei die Anschlusselemente (7, 8) mit Kontaktfedern (15) verbunden sind, an deren freien äußeren Enden Kontaktstellen (16) ausgebildet sind, die einander gegenüberliegend angeordnet sind und an die Gegenkontakte (14) einer Schutzbaugruppe (12) ansteckbar sind, wobei die ankommenden und abgehenden Leitungen (17) unmittelbar über die jeweiligen gegenüberliegend angeordneten Kontaktstellen (16) oder die eingeschobene Schutzbaugruppe (12) miteinander verbindbar sind, und mit einem isolierenden Spreizelement (18; 29), das wahlfrei zwischen die jeweiligen Kontaktfedern (15) einsteckbar ist, um die jeweiligen gegenüberliegend angeordneten Kontaktfedern (15) von einander weg zu spreizen, um die jeweiligen Kontaktstellen (16) in einer geöffneten Stellung zu halten, in welcher der Abstand zwischen den geöffneten Kontaktstellen (16) kleiner ist, als der entsprechende Abstand zwischen den Gegenkontakten (14) der Schutzbaugruppe (12), so daß die Gegenkontakte (14) beide der zugehörigen gegenüberliegend angeordneten Kontaktstellen (16) kontaktieren können.

2. Kontaktbauteil nach Anspruch 1, **dadurch gekennzeichnet, daß** das Spreizelement als Spreizstecker (18) ausgebildet ist, der in der Längsrichtung der Kontaktfedern (15) in das Kontaktbauteil (4) einsetzbar und verrastbar ist.

3. Kontaktbauteil nach Anspruch 2, **dadurch gekennzeichnet, daß** der Spreizstecker (18) Rastnasen (22) aufweist, die in schlitzartige Durchbrüche (23) der Kontaktfedern (15) einrastbar sind.

4. Kontaktbauteil nach Anspruch 2 oder 3, **dadurch gekennzeichnet, daß** der kammartig ausgebildete Spreizstecker (18) mit Steckzungen (20) versehen ist, die zwischen die Kontaktfedern (15) einsetzbar sind und die mittels eines gemeinsamen Quersteges (19) miteinander verbunden sind.

5. Kontaktbauteil nach Anspruch 4, **dadurch gekennzeichnet, daß** das Kontaktbauteil (4) im Bereich der Kontaktstellen (16) für die Gegenkontakte (14) der Schutzbaugruppe (12) eine schlitzartige Ausnehmung (24) aufweist, deren Tiefe so bemessen ist, daß sie den Quersteg (19) des Spreizsteckers (18) und die Gegenkontakte (14) der Schutzbaugruppe (12) aufnimmt.

6. Kontaktbauteil nach Anspruch 1, **dadurch gekennzeichnet, daß** das Spreizelement als Spreizstift (29) ausgebildet ist, der in der Querrichtung der Kontaktfedern (15) zwischen diese einschiebbar ist.

7. Kontaktbauteil nach Anspruch 6, **dadurch gekennzeichnet, daß** der Spreizstift als Rundstift (29) ausgebildet ist, der in einer Querbohrung (28) des Kontaktbauteils (4) geführt ist.

8. Kontaktbauteil nach einem der vorhergehenden Ansprüche, **dadurch gekennzeichnet, daß** das Spreizelement zum Zusammenwirken mit einer unterschiedlichen Anzahl der Kontaktfedern in unterschiedlicher Breite herstellbar ist.

## Claims

1. Contact component (4) of a distribution frame of a telecommunications system, having two rows of connecting elements (7, 8), which are situated opposite one another in pairs and can be interconnected, for incoming and outgoing lines (17), the connecting elements (7, 8) being connected to contact springs (15) on whose free outer ends there are constructed the contact points (16) which are arranged opposite one another and onto which mating contacts (14) of a contactor assembly (12) can be plugged, it being possible to interconnect the incoming and outgoing lines (17) directly via the respective oppositely arranged contact points (16) or the inserted contactor assembly (12), and having an insulating spreader element (18; 29) which can be plugged in optionally between the respective contact springs (15) in order to spread the respective oppositely arranged contact springs (15) away from one another so as to hold the respective contact points (16) in an open position in which the distance between the open contact points (16) is smaller than the corresponding distance between the mating contacts (14) of the contactor assembly (12) so that the mating contacts can make contact with both of the associated oppositely arranged contact points (16).

2. Contact component according to Claim 1, **characterized in that** the spreader element is constructed as a spreader plug (18) which can be inserted into the contact component (4) in the longitudinal direction of contact springs (15) and latched.

3. Contact component according to Claim 2, **characterized in that** the spreader plug (18) has latching noses (22) which can be latched into slot-like cutouts (23) in the contact springs (15).

4. Contact component according to Claim 2 or 3, **characterized in that** the spreader plug (18), which is constructed like a comb, is provided with plug-in tongues (20) which can be inserted between the contact springs (15) and which are interconnected by means of a common transverse web (19).

5. Contact component according to Claim 4, **characterized in that** in the region of the contact points (16) the contact component (4) has for the mating contacts (14) of the contactor assembly (12) a slot-like opening (24) whose depth is dimensioned such that it holds the transverse web (19) of the spreader plug (18) and the mating contacts (14) of the contactor assembly (12).

6. Contact component according to Claim 1, **characterized in that** the spreader element is constructed as a spreader pin (29) which can be inserted between the contact springs (15) in the transverse direction thereof.

7. Contact component according to Claim 6, **characterized in that** the spreader pin is constructed as a round pin (29) which is guided in a transverse bore (28) in the contact component (4).

8. Contact component according to one of the preceding claims, **characterized in that** the spreader element can be produced with different widths for cooperation with a differing number of contact springs.

## Revendications

1. Composant de contact (4) d'un distributeur d'une installation de télécommunication, comprenant deux rangées d'éléments de connexion (7, 8) opposés les uns aux autres par paires et pouvant être connectés les uns aux autres, pour des conduites d'entrée et de sortie (17), les éléments de connexion (7, 8) étant connectés à des ressorts de contact (15) sur les extrémités extérieures libres desquels sont réalisés des points de contact (16) qui sont disposés en regard l'un de l'autre et qui peuvent être enfichés sur les contacts conjugués (14) d'un module de protection (12), les conduites d'entrée et de sortie (17) pouvant être connectées les unes aux autres directement par le biais des points de contact (16) disposés respectivement en regard l'un de l'autre ou par le biais du module de protection (12) enfoncé, et comprenant un élément d'écartement isolant (18 ; 29) qui peut être enfiché au choix entre les ressorts de contact respectifs (15) afin d'écarter l'un de l'autre les ressorts de contact (15) disposés respectivement en regard l'un de l'autre, afin de maintenir les points de contact respectifs (16) dans une position ouverte dans laquelle la distance entre les points de contact ouverts (16) est plus petite que la distance correspondante entre les contacts conjugués (14) du module de protection (12), de sorte que les contacts conjugués (14) puissent venir en contact avec les deux points de contact (16) associés disposés en regard l'un de l'autre.

2. Composant de contact selon la revendication 1, **caractérisé en ce que** l'élément d'écartement est réalisé sous forme de fiche d'écartement (18) qui peut être insérée et encliquetée dans la direction longitudinale des ressorts de contact (15) dans le composant de contact (4).

3. Composant de contact selon la revendication 2, **caractérisé en ce que** la fiche d'écartement (18) présente des nez d'encliquetage (22) qui peuvent s'encliqueter dans des orifices en forme de fente (23) des ressorts de contact (15).

4. Composant de contact selon la revendication 2 ou 3, **caractérisé en ce que** la fiche d'écartement (18) réalisée en forme de peigne est pourvue de langues d'enfichage (20) qui peuvent être insérées entre les ressorts de contact (15) et qui sont connectées les unes aux autres au moyen d'une âme transversale commune (19).

5. Composant de contact selon la revendication 4, **caractérisé en ce que** le composant de contact (4) présente, dans la région des points de contact (16) pour les contacts conjugués (14) du module de protection (12), un évidement en forme de fente (24) dont la profondeur est dimensionnée de telle sorte qu'il reçoive l'âme transversale (19) de la fiche d'écartement (18) et les contacts conjugués (14) du module de protection (12).

6. Composant de contact selon la revendication 1, **caractérisé en ce que** l'élément d'écartement est réalisé sous forme de tige d'écartement (29) qui peut être enfoncée dans la direction transversale des ressorts de contact (15) entre ceux-ci.

7. Composant de contact selon la revendication 6, **caractérisé en ce que** la tige d'écartement est réalisée sous forme de tige ronde (29) qui est guidée dans un alésage transversal (28) du composant de contact (4).

8. Composant de contact selon l'une quelconque des revendications précédentes, **caractérisé en ce que** l'élément d'écartement peut être fabriqué pour coopérer avec un nombre différent des ressorts de contact dans une largeur différente.
